# EUROPÄISCHE PATENTSCHRIFT

(11) **EP 0 355 010 B1**
(45) Veröffentlichungstag und Bekanntmachung des Hinweises auf die Patenterteilung: **28.04.1993**
(21) Anmeldenummer: 89114723.3
(22) Anmeldetag: 09.08.1989
(51) Int. Cl.: B01D 46/42, B01D 46/04, B01D 46/24, A01F 25/22

(54) **Filterpatrone**
Filter cartridge
Cartouche filtrante

(30) Priorität: 13.08.1988 DE 8810295 U
(43) Veröffentlichungstag der Anmeldung: 21.02.1990
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.

(56) Entgegenhaltungen:
- EP-A- 0 142 951
- EP-A- 0 225 445
- WO-A-87/02268
- AT-B- 377 711
- US-A- 4 324 571

## Beschreibung

### TECHNISCHES GEBIET

Die Erfindung betrifft eine Filterpatrone zum Reinigen des Entstaubungsfilters eines Silos. Das Reinigen erfolgt mittels stoßweise in die Filterpatrone eingeblasener Luft, wobei die Luft über eine Luftdüse zugeführt wird, die oberhalb der Filterpatrone vorhanden ist.

Ein derartiger Entstaubungsfilter wird für die Filtrierung der Abluft beim pneumatischen Befüllen eines Silos mit einem pulverförmigen Schüttgut wie z. B. Zement eingesetzt. Während des Füllvorganges strömt die beim Befüllen als Trägermedium eingesetzte Luft zusammen mit dem Füllmaterial von außen gegen die einen Filtermantel darstellende Filterfläche des Filters. Da lediglich die Luft durch den Filter hindurch ins Freie entweichen kann, lagert sich auf der Außenseite der Filterfläche das Füllgut ab. Damit der Filter nicht unwirksam wird, muß er von Zeit zu Zeit gereinigt werden.

### STAND DER TECHNIK

Es ist bekannt, den Filter dadurch zu reinigen, daß von oben in seinen Innenraum Druckluft stoßweise eingeblasen wird. Während dieses Reinigungsvorganges ist der Filter in seiner Filterfunktion unwirksam, da während dieses Zeitraumes keine Luft von außen nach innen durch seinen Filtermantel hindurchströmen kann.

Damit sich während des Reinigungsvorganges, bei dem sich durch die eingeblasene Druckluft in dem Inneren des Filters der Druck erhöht, nicht das Überdruckventil am Silo öffnet mit der Folge, daß durch diese Zwangsentlüftung Füllgut aus dem Silo herausgeblasen wird, was sowohl aus wirtschaftlichen Gründen als auch insbesondere wegen der dadurch bewirkten Umweltverschmutzung in höchstem Maße unerwünscht ist, ist es aus der WO-A-87 02268 bekannt, mehrere Filterpatronen innerhalb eines Filters anzuordnen, die so zeitlich nacheinander gereinigt werden, daß niemals alle Filterpatronen gleichzeitig gereinigt werden und damit für den Filtervorgang nicht zur Verfügung stehen. Die den einzelnen Filterpatronen zugeordneten Luftdüsen sind steuerungsmäßig so mit einem zusätzlich vorhandenen Luftspeicher verbunden, daß nach einem durch Vorhandensein eines bestimmten Überdrucks im Filter ausgelösten Reinigungszyklusses noch einmal zumindest ein Reinigungszyklus ablaufen kann. Dadurch wird erreicht, daß nach Beendigung eines Füllvorganges die Filterschläuche gereinigt vorhanden sind.

Je kleiner die Filterpatrone ist, umso leichter d. h. mit umso weniger Luftmenge läßt sich ein Unterdruck in der Filterpatrone zum Zwecke des Reinigens aufbauen. Daher sind aus Reinigungsgründen möglichst im Durchmesser kleine Filterpatronen wünschenswert. Die Filterwirkung hängt dagegen von der Größe des Filtermantels ab. Mit je weniger Filterpatronen aber eine bestimmte Gesamt-Filtermanteloberfläche zur Verfügung gestellt wird, desto preiswerter sind die Gesamtkosten für den Filter. Weniger Filterpatronen bedingen bei vergleichbarer Filteroberfläche allerdings im Durchmesser größere Filterpatronen. Für den Filtervorgang ist die Größe des Durchmessers einer Filterpatrone praktisch ohne Belang; zum Reinigen wirkt sich das Vergrößern einer Filterpatrone im Durchmesser dagegen ungünstig aus, da die oberhalb der Filterpatrone angeordnete Düse bezüglich ihres Luftdurchsatzes entsprechend groß ausgelegt werden muß.

Eine Filterpatrone der eingangs genannten Art ist aus der EP-A-0 225 445 bekannt. Durch die dort offenbarte, im Querschnitt kreisrunde Filterpatrone ragt zentrisch eine Stange hindurch, die von einem im Querschnitt kreisringförmigen Mantel umgeben ist. Zwischen diesem Mantel und der Filteroberfläche sind in Längsrichtung sich erstreckende Zwischenwände vorhanden, die das Innere der Filterpatrone in mehrere Innenraumbereiche unterteilen. Oberhalb jedes dieser Innenraumbereiche ist eine Luftdüse angeordnet, durch die Druckluft ins Innere des betreffenden Innenraumbereiches hineingeblasen werden kann. Die dazu benötigte Druckluft wird über ein Rohrsystem der Filterpatrone von außen zugeführt.

Auch bei der aus der EP-A-0 142 951 bekannten Filterpatrone wird deren Innenraum durch mehrere in vertikaler Richtung sich erstreckende Zwischenwände in mehrere taschenartige Innenraumbereiche unterteilt. Auch diese Innenraumbereiche können durch jeweils oberhalb angeordnete Luftdüsen nacheinander mit Druckluft beaufschlagt werden. Diese Druckluft wird der Filterpatrone ebenfalls von außerhalb zugeführt.

### DARSTELLUNG DER ERFINDUNG

Ausgehend von diesem vorbekannten Stand der Technik liegt der Erfindung die Aufgabe zugrunde, Filterpatronen für einen Filter anzugeben, die sowohl optimal hinsichtlich ihrer Filterwirkung als auch hinsichtlich ihres Reinigungsaufwandes sind.

Diese Erfindung ist durch die Merkmale des Hauptanspruchs gegeben. Sie ist bei einer Filterpatrone zum Reinigen des Entstaubungsfilters eines Silos der eingangs genannten Art dementsprechend dadurch gekennzeichnet, daß der im Inneren der Filterpatrone vorhandene Aussparungskörper als Druckluftspeicher ausgebildet ist, der über eine Luftleitung an einer Druckluftversorgungs-Einrichtung angeschlossen ist. Bei einer derartigen Filterpatrone verkleinert der Druckluftspeicher den Innenraum der Filterpatrone, so daß sich der zum Reinigen erforderliche Überdruck im Inneren der Filterpatrone mit einer entsprechend verringerten Luftmenge und damit schneller aufbauen läßt. Dies führt dazu, daß die oberhalb der Filterpatrone vorhandene zumindest eine Luftdüse für einen kleineren Luftdurchsatz ausgelegt werden kann. Da der Druckluftspeicher keinen Kontakt mit dem Filtermantel der Filterpatrone besitzt, wird die Filterwirkung nicht beeinträchtigt. Dadurch ist es möglich, im Durchmesser relativ große Filterpatronen einzusetzen, was zu einer verringerten Gesamtzahl von Filterpatronen in einem Filter führt. Außerdem läßt sich durch die Integration des Druckluftspeichers mit der Filterpatrone der Filter damit wünschenswert kompakt ausbilden. Dies hat bedeutende wirtschaftliche Vorteile.

Um zu erreichen, daß vergleichsweise noch kleiner ausgelegte Luftdüsen verwendet werden können, sind in vorteilhafter Weise in der Filterpatrone Zwischenwände vorhanden, die die Innenseite des Filtermantels mit der Außenseite des Aussparungskörpers so luftdicht verbinden, daß der Innenraum der Filterpatrone in mehrere, oben offene, seitlich durch Bereiche des Filtermantels und Bereiche des Aussparungskörpers umgrenzte Innenraumbereiche unterteilt wird, wobei dann oberhalb jedes dieser Innenraumbereiche eine Luftdüse angeordnet werden kann. Durch Zwischenräume wird innerhalb einer Filterpatrone der wirksam vorhandene Innenraum unterteilt, so daß nicht ein einziger verkleinerter Innenraum sondern mehrere, nochmals verkleinerte Innenraumbereiche bezüglich einer einzelnen Luftdüse vorhanden sind. Zur Reduzierung des Luftbedarfs ist in vorteilhafter Weise zwischen einer Luftdüse und der Filterpatrone eine Venturidüse angeordnet.

Eine besonders vorteilhafte Weiterbildung der Erfindung zeichnet sich dadurch aus, daß der Aussparungskörper, der sich in Längsrichtung der Filterpatrone durch den gesamten Innenraum der Filterpatrone und durch den Innenraum der Venturi-Düse erstreckt, zentrisch innerhalb der Filterpatrone angeordnet wird, und daß zumindest zwei getrennt voneinander angeordnete Zwischenwände angeordnet werden, die ebenflächig ausgebildet sind und die jeweils mit ihrer einen Stirnseite auf der Innenseite des Filtermantels bzw. der Innenseite der Venturi-Düse und mit ihrer gegenüberliegenden Stirnseite auf der Außenseite des Aussparungskörper anstossen, wobei jede Wand an dem Aussparungskörper luftdicht anliegt. Nicht nur die Filterpatrone sondern auch die oberhalb derselben angeordnete Venturi-Düse wird damit durch den Aussparungskörper und die Zwischenwände in mehrere Innenraumbereiche auf konstruktiv einfache Weise unterteilt.

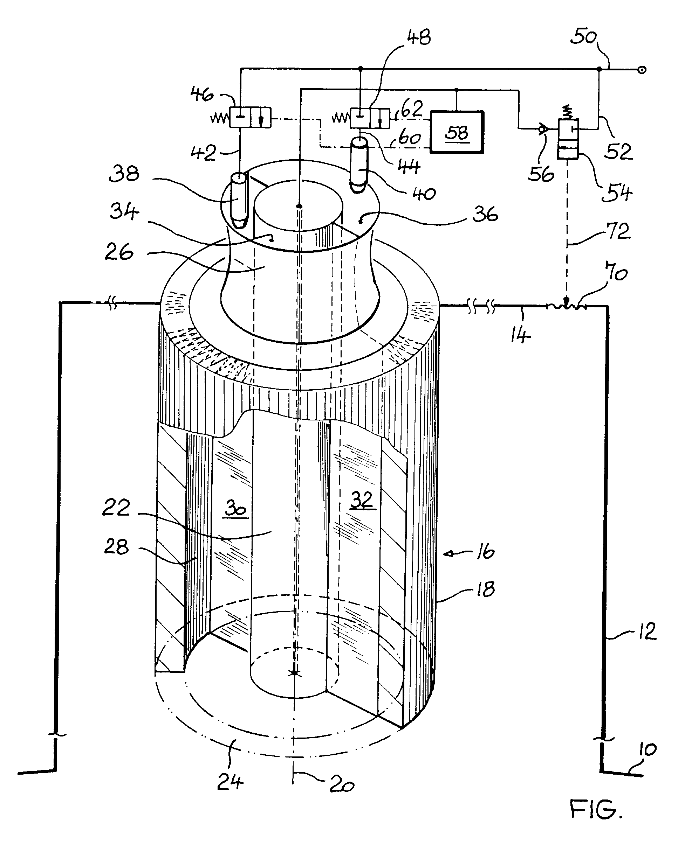

### KURZE BESCHREIBUNG DER ZEICHNUNG

Die Erfindung wird im folgenden anhand des in der Zeichnung dargestellten Ausführungsbeispiels näher beschrieben und erläutert. Die einzige Figur zeigt eine perspektivische schematische Darstellung einer Filterpatrone, die auf dem schematisch dargestellten Dach eines Silos angeordnet ist.

### WEGE ZUR AUSFÜHRUNG DER ERFINDUNG

Auf einem Silodach 10 ist das hohlzylinderförmige Gehäuse eines Filters 12 montiert. Das Innere des Filters 12 bildet mit dem Inneren des Silos eine Einheit.

Von der oben verschlossenen Decke 14 des Silos ragt eine oben offene Filterpatrone 16 nach unten in den Filter 12 hinein. Die Außenfläche der Filterpatrone 16 wird von einem zickzackförmig gefalteten Filtermantel 18 gebildet. Der Filtermantel kann auch aus einem Filterschlauch oder einem sonstigen in der Filtertechnik gebräuchlichen Filtermedium bestehen. Auch die Querschnittsform der Filterpatrone kann beliebig sein.

Im Inneren der sich in Längsrichtung 20 erstreckenden Filterpatrone 16 ist zentral symmetrisch ein im Beispielfall kreiszylinderförmiger Luftspeicher 22 vorhanden, der von der unten verschlossenen Bodenfläche 24 der Filterpatrone 16 nach oben durch die Filterpatrone 16 vollständig hindurchragt. Der Luftspeicher 22 ragt ferner noch durch das Innere einer Venturi-Düse 26 hindurch, die ebenfalls zentrisch zur Längsrichtung 22 von oben auf der Filterpatrone 16 aufsitzt.

Zwischen dem Luftspeicher 22 und der Innenseite 28 des Filtermantels 18 sind zwei Trennwände 30, 32 vorhanden, die sich in Längsrichtung durch die Filterpatrone 16 und die Venturi-Düse 26 hindurch erstrecken und mit ihrer einen Stirnseite auf der Innenseite 28 und mit ihrer gegenüberliegenden Stirnseite auf der Außenseite des Luftspeichers 22 anliegen.

Die Verbindung dieser Wände 30, 32 mit dem Luftspeicher 22 ist luftdicht. Außerhalb des Luftspeichers 22 sind damit im Bereich der Venturi-Düse 26 und der Filterpatrone 16 zwei Zwischenräume 34, 36 vorhanden. Oberhalb eines jeden Zwischenraumes 34, 36 ist eine Luftdüse 38, 40 vorhanden. Jede dieser Düsen ist über eine Stichleitung 42, 44 mit einem ZweiWege-Ventil 46 bzw. 48 verbunden. Die beiden Zwei-Wege-Ventile 46, 48 sind ihrerseits mit einer Zuführleitung 50 verbunden, die ihrerseits an einem Luft-Vorratsbehälter oder mit einem Kompressor in dauernder leitender Verbindung steht.

Von der Zuführleitung 50 zweigt eine weitere Luftleitung 52 ab, die über einen als Zwei-Wege-Ventil ausgebildeten Schalter 54 und ein nachgeschaltetes Rückschlagventil 56 einerseits mit einem Ventilblock 58 und andererseits mit dem im Inneren der Filterpatrone 16 angeordneten Luftspeicher 22 verbunden ist.

Von dem Ventilblock 58 führen pneumatische Leitungsverbindungen 60 bzw. 62 zu dem Zwei-Wege-Ventil 46 bzw. 48. Diese beiden Zwei-Wege-Ventile 46, 48 werden über diesen Ventilblock 58 gesteuert. Die Steuerung geschieht pneumatisch gegen die beiden Ventilen in ihrer AUS-Stellung haltende Rückstellfedern.

Die oberhalb der Decke 14 vorhandenen Bauteile des Filters bzw. die für die pneumatische Steuerungsvorrichtung werden von einer nicht dargestellten Haube bedeckt.

Die Zufuhr von Luft vom Kompressor durch die Luftdüsen 38, 40 in die Filterpatrone 16 hinein funktioniert auf folgende Weise:
An den Düsen liegt fortwährend über die Leitung 50 Druckluft an. In Ruhestellung befinden sich die Ventile 46, 48 in ihrer in der Zeichnung dargestellten Sperrstellung, so daß die Luft nicht durch die Düsen in den jeweiligen Zwischenraumbereich 34 bzw. 36 hineingeblasen werden kann.

Auch die Luftleitung 52 ist fortwährend mit Druckluft gefüllt. Sobald nun im Silo und damit im Inneren des Filters 12 sich ein bestimmter Überdruck aufgebaut hat, weil sich an der Außenseite des Filtermantels 18 eine bestimmte Menge an Füllstoffen abgelagert hat, wölbt sich eine in der Decke 14 vorhandene Membran 70 so weit nach oben aus, daß sich über einen sich ebenfalls nach oben verschiebenden Tasthebel 72 der Schalter 54 gegen die Kraft einer Rückstellfeder hin öffnet. Dadurch kann die Luft aus der Leitung 52 sowohl in den Ventilblock 58 als auch in den Luftspeicher 22 strömen. Von dem Ventilblock 58 strömt dann die Luft über die Leitungsverbindungen 60, 62 zu den Ventilen 46, 48. Die in dem Ventilblock 58 vorgesehene logische Schaltungsfunktion ist derart, daß die beiden Ventile 46, 48 zeitlich nacheinander geöffnet werden. Bevor dabei das jeweils nächste Ventil geöffnet wird, wird das vorherige Ventil geschlossen. Dadurch wird immer nur in einen Zwischenraumbereich 34 bzw. 36 Luft hineingeblasen. Während dieses Blasvorganges steht der Luftspeicher 22 unter Überdruck.

Der Reinigungsvorgang wird in aufeinanderfolgenden Zyklen so lange wiederholt, wie die Membran in ihrer hochgewölbten Stellung verharrt. Die dazu benötigte Luft wird aus dem nicht dargestellten Kompressor der Leitung 50 zugeführt. Sobald der Überdruck im Filter und damit auch der im Silo unter einen gewünschten Wert gefallen ist und die Membran 70 aus ihrer maximalen Wölbstellung wieder abgesunken ist, verschiebt sich der Tasthebel 72 ebenfalls nach unten, so daß der Schalter 54 seine in der Zeichnung dargestellte Lage einnimmt. In dieser Stellung wird die Luftzufuhr zu dem Ventilblock 58 und dem Luftspeicher 22 unterbrochen. Nunmehr entweicht die Luft aus dem Luftspeicher 22 heraus. Infolge des Rückschlagventils 56 kann diese Luft nur in den Ventilblock 58 hineinentweichen. Dadurch wird der Ventilblock 58 noch einmal mit Luft beaufschlagt, so daß zumindest noch einmal die Ventile 46, 48 in ihre EIN-Stellung verschoben werden können. Es findet dadurch noch einmal zumindest ein Reinigungsvorgang statt. Anschließend daran ist der Überdruck im Luftspeicher 22 abgebaut, so daß der Ventilblock 58 nicht mehr mit einer Steuerluft beaufschlagt werden kann. Dadurch wiederum ist der Reinigungsvorgang insgesamt abgeschlossen. Zu diesem Zeitpunkt ist der Filtermantel 18 in allen seinen Bereichen vollständig gereinigt. Der nächste Reinigungsvorgang setzt erst ein, wenn sich wieder innerhalb des Filters 12 ein bestimmter Überdruck eingestellt und sich infolgedessen die Membran 60 um ein bestimmtes Maß ausgewölbt hat.

Obwohl nur eine Filterpatrone 16 im Filter 12 dargestellt ist, können selbstverständlich mehrere derartige Filterpatronen 16 oder auch andere Filterpatronen, die nur einen einheitlichen Innenraum besitzen, vorhanden sein.

Aus dem Luftspeicher 22 können sowohl die Luftdüsen von einer einzelnen Filterpatrone 16 als auch - beim Vorhandensein von mehreren Filterpatronen - die entsprechend dann mehreren Düsen gesteuert werden.

Bei Vorhandensein von mehreren Filterpatronen innerhalb eines Filters 12 können die Luftdüsen 38, 40 einer der Filterpatrone 16 entsprechenden Filterpatrone auch gemeinsam geschaltet werden. Es muß dann nur sichergestellt werden, daß nicht alle in einem Filter vorhandenen Filterpatronen gleichzeitig gereinigt werden. Dies kann durch einen entsprechend zeitlich versetzten Reinigungsvorgang für die einzelnen Patronen leicht sichergestellt werden.

Die Anordnung von beliebig vielen Zwischenwänden in einer Filterpatrone oder einem sonstigen Filterkörper wie beispielsweise einem plattenförmigen Filter erlaubt es, die erforderliche Filteroberfläche nur mit einem einzigen Filterkörper herzustellen. Durch das Fehlen eines weiteren Filterkörpers wird erreicht, daß keine der Filteroberfläche dieses Filterkörpers gegenüberliegenden Filteroberflächen eines benachbarten Filterkörpers vorhanden sind. Dadurch können sich die beim Abreinigen des Filtermantels von demselben weggeschleuderten Ablagerungen nicht auf anderen Filtermantel-Oberflächen festsetzen.

## Patentansprüche

1. Filterpatrone zum Reinigen des Entstaubungsfilters eines Silos mittels zumindest einer Luftdüse, in die stoßweise Luft eingeblasen wird, die oberhalb einer einen Filtermantel besitzenden Filterpatrone des Filters angeordnet ist, wobei
- zumindest ein Aussparungskörper (22) im Inneren der Filterpatrone (16) vorhanden ist,
- zwischen dem Aussparungskörper (22) und dem Filtermantel (18) zumindest ein Zwischenraum (34, 36) vorhanden ist,
- der Aussparungskörper (22) allseitig verschlossen ist, **dadurch gekennzeichnet,** daß der Aussparungskörper als Druckluftspeicher (22) ausgebildet ist, der über eine Luftleitung (52) an einer Druckluftversorgungs-Einrichtung anschließbar ist.

2. Filterpatrone nach Anspruch 1,
**dadurch gekennzeichnet,** daß Zwischenwände (30, 32) vorhanden sind, die die Innenseite (28) des Filtermantels (18) mit der Außenseite des Aussparungskörpers (22) so luftdicht verbinden, daß der Innenraum der Filterpatrone in mehrere, oben offene, seitlich durch Bereiche des Filtermantels (18) und Bereiche des Aussparungskörers (22) umgrenzte Innenraumbereiche (34, 36) unterteilt ist, und daß oberhalb jedes dieser Innenraumbereiche eine Luftdüse (38, 40) vorhanden ist.

3. Filterpatrone nach Anspruch 1,
**dadurch gekennzeichnet,** daß zwischen der zumindest einen Luftdüse (38, 40) und der Filterpatrone (16) eine Venturi-Düse (26) angeordnet ist.

4. Filterpatrone nach Anspruch 2 und 3,
**dadurch gekennzeichnet,** daß
- ein Aussparungskörper (22) vorhanden ist, der zentrisch innerhalb der Filterpatrone (16) angeordnet ist und sich in Längsrichtung (20) der Filterpatrone (16) durch den gesamten Innenraum derselben und durch den Innenraum der Venturi-Düse (26) erstreckt, und
- zumindest zwei getrennt voneinander angeordnete Zwischenwände (30, 32) vorhanden sind, die ebenflächig ausgebildet sind und die mit ihrer einen Stirnseite auf der Innenseite (28) des Filtermantels (18) bzw. der Innenseite der Venturi-Düse (26) und mit ihrer gegenüberliegenden Stirnseite auf der Außenseite des Aussparungskörpers (22) anstoßen, wobei jede Wand (30, 32) an dem Aussparungskörper (22) luftdicht anliegt.

## Claims

1. Filter cartridge for cleaning the dedusting filter of a silo by means of at least one air nozzle into which air is blown intermittently and which is disposed above a filter cartridge, provided with a filter jacket, in the filter, wherein
- at least one blanking body (22) is provided in the interior of the filter cartridge (16),
- at least one interspace (34, 36) is provided between the blanking body (22) and the filter jacket (18),
- the blanking body (22) is closed on all sides, characterized in that the blanking body is in the form of a compressed air reservoir (22) adapted to be connected via an airpipe (52) to a compressed air supply means.

2. Filter cartridge according to Claim 1, characterized in that partitions (30, 32) are provided which connect the inside (28) of the filter jacket (18) to the outside of the blanking body (22) so airtightly that the interior space of the filter cartridge is subdivided into a plurality of interior regions (34, 36) which are open at the top and at the sides are bounded by parts of the filter jacket (18) and parts of the blanking body (22), and that an air nozzle (38, 40) is provided above each of these interior regions.

3. Filter cartridge according to Claim 1, characterized in that a venturi nozzle (26) is disposed between the at least one air nozzle (38, 40) and the filter cartridge (16).

4. Filter cartridge according to Claims 2 and 3, characterized in that a blanking body (22) is provided which is disposed centrally inside the filter cartridge (16) and extends in the longitudinal direction (20) of the filter cartridge (16) through the entire interior space of the latter and through the interior space of the venturi nozzle (26), and in that at least two partitions (30, 32) are provided which are disposed separately from one another and have a plane surface, and which abut at one face against the inside (28) of the filter jacket (18) or the inside of the venturi nozzle (26), and at their opposite face against the outside of the blanking body (22), each wall (30, 32) lying airtightly against the blanking body (22).

## Revendications

1. Cartouche de filtre servant au nettoyage du filtre de dépoussiérage d'un silo, à l'aide d'au moins une buse d'air, dans laquelle de l'air est soufflé par à-coups, et qui est installée au-dessus d'une cartouche de filtre possédant une enveloppe de filtration, tandis qu'au moins un corps évidé (22) est prévu à l'intérieur de la cartouche de filtre (16), qu'entre le corps évidé (22) et l'enveloppe de filtration (18) au moins un espace intermédiaire (34, 36) est présent, et que le corps évidé (22) est refermé sur tous ses côtés, caractérisée en ce que le corps évidé est configuré en forme de réservoir d'air comprimé (22) qui peut être raccordé par l'intermédiaire d'une conduite d'air (52) à un dispositif d'alimentation en air sous pression.

2. Cartouche de filtre selon la revendication 1, caractérisée en ce que sont prévues des parois intermédiaires (30, 32) qui relient hermétiquement la face intérieure (28) de l'enveloppe de filtration (18) à la face extérieure du corps évidé (22) de telle sorte que l'enceinte de la cartouche de filtre soit divisée en plusieurs enceintes intérieures (34, 36) ouvertes vers le haut et délimitées latéralement par des parties de l'enveloppe de filtration (18) et de parties du corps évidé (22), et en ce qu'au-dessus de chacune de ces enceintes intérieures est prévue une buse d'air (38, 40).

3. Cartouche de filtre selon la revendication 1, caractérisée en ce qu'entre la ou les buses d'air (38, 40) et la cartouche de filtre (16) est installée une buse venturi (26).

4. Cartouche de filtre selon la revendication 2 ou 3, caractérisée en ce qu'un corps évidé (22) est prévu, qui est installé centralement à l'intérieur de la cartouche de filtre (16), qui s'étend dans le sens de la longueur (20) de la cartouche de filtre (16) et traverse tout l'espace intérieur de celle-ci ainsi que l'espace intérieur de la buse venturi (26), et en ce qu'il existe au moins deux parois intermédiaires (30, 32) installées à distance l'une de l'autre et présentant une forme plane, un de leurs côtés frontaux reposant contre la face intérieure (28) de l'enveloppe de filtration (18) ou contre la face intérieure de la buse venturi (26), leur côté frontal opposé reposant contre la face extérieure du corps évidé (22), chaque paroi (30, 32) reposant hermétiquement contre le corps évidé (22).
